# EUROPÄISCHE PATENTSCHRIFT

(11) **EP 4 311 998 B1**
(45) Veröffentlichungstag und Bekanntmachung des Hinweises auf die Patenterteilung: **06.08.2025**
(21) Anmeldenummer: 23187473.6
(22) Anmeldetag: 25.07.2023
(51) Int. Cl.: G01B 17/00, B61K 9/12, G01B 21/12

(54) **VERFAHREN ZUM ERMITTELN EINES RADDURCHMESSERS EINES SCHIENENFAHRZEUGS, ENTSPRECHENDES STEUERGERÄT FÜR EIN SCHIENENFAHRZEUG UND ENTSPRECHENDES COMPUTERPROGRAMMPRODUKT**
METHOD FOR DETERMINING A WHEEL DIAMETER OF A RAIL VEHICLE, CORRESPONDING CONTROL UNIT FOR A RAIL VEHICLE AND CORRESPONDING COMPUTER PROGRAM PRODUCT
MÉTHODE DE DÉTERMINATION D'UN DIAMÈTRE DE ROUE D'UN VÉHICULE FERROVIAIRE, UNITÉ DE CONTRÔLE CORRESPONDANTE POUR UN VÉHICULE FERROVIAIRE ET PRODUIT DE PROGRAMME INFORMATIQUE CORRESPONDANT

(30) Priorität: 26.07.2022 DE 102022207597
(43) Veröffentlichungstag der Anmeldung: 31.01.2024
(73) Patentinhaber: ZF Friedrichshafen AG, 88046 Friedrichshafen (DE)
(72) Erfinder: Giesler, Jens, 88045 Friedrichshafen (DE); Horn, Susanne, 88069 Tettnang (DE); Stock, David, 88046 Friedrichshafen (DE); Dentler, Tobias, 88074 Meckenbeuren (DE); Mors, Axel, 88045 Friedrichshafen (DE); Norris, Adam, 88090 Immenstaad (DE); Carl, Christian, 88085 Langenargen (DE); Hertkorn, Michael, 88131 Bodolz (DE)

(56) Entgegenhaltungen:
- DE-A1- 102010 052 667
- DE-A1- 102016 200 436
- DE-A1- 3 148 401

## Beschreibung

Die vorliegende Erfindung betrifft ein Verfahren zum Ermitteln eines Raddurchmessers oder einer hieraus ableitbaren Größe eines Schienenfahrzeugs.

DE 10 2016 200 436 A1 offenbart ein Verfahren zum Ermitteln eines Raddurchmessers, wobei eine Anzahl an Radumdrehungen mittels eines auf einer Achse des Fahrgestells angeordneten Wegimpulsgebers über eine vorbestimmte Strecke ermittelt wird und der Raddurchmesser anhand der Anzahl an Radumdrehungen und der Länge der vorbestimmten Strecke ermittelt wird.

### ZUSAMMENFASSUNG DER ERFINDUNG

Demgemäß ist vorgesehen:
- ein Verfahren zum Ermitteln eines Raddurchmessers oder einer hieraus ableitbaren Größe eines Schienenfahrzeugs mit den folgenden Schritten: Erfassen von Vibrationen, die von einem Rad des Schienenfahrzeugs emittiert werden, mittels eines Vibrationssensors als Vibrationsprofil; Ermitteln von periodischen Merkmalen in dem Vibrationsprofil; Ableiten einer Anzahl an Radumdrehungen in dem Vibrationsprofil anhand der periodischen Merkmale des Vibrationsprofils; Ermitteln oder Vorgeben einer Strecke, die von dem Schienenfahrzeug zurückgelegt wurde, während das akustische Vibrationsprofil erfasst wurde; Ermitteln des Raddurchmessers oder der hieraus ableitbaren Größe anhand der Strecke und der Anzahl der Radumdrehungen.

Ein Sensor, auch als Detektor, (Messgrößen- oder Mess-)Aufnehmer oder (Mess-)Fühler bezeichnet, ist ein technisches Bauteil, das bestimmte physikalische, chemische Eigenschaften oder Zustände, z. B. Temperatur, Feuchtigkeit, Druck, Geschwindigkeit, Helligkeit, Beschleunigung, pH-Wert, Ionenstärke, elektrochemisches Potential und/oder die stoffliche Beschaffenheit seiner Umgebung qualitativ oder als Messgröße quantitativ erfassen kann. Diese Größen werden mittels physikalischer oder chemischer Effekte erfasst und als Sensordaten in ein weiterverarbeitbares elektrisches Signal umgeformt. Fahrzeugsensoren sind an einem Fahrzeug montiert, um eine Fahrzeugumgebung zu erfassen. Fahrzeugsensoren sind an einem Fahrzeug montierbar oder montiert. Fahrzeugsensoren umfassen optische Sensoren, beispielsweise Kamera, Lidar, Radar, TOF und weitere Sensortechnologien, beispielsweise Akustiksensoren.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt.

Eine ableitbare Größe des Raddurchmessers ist beispielsweise der Radumfang, die Länge eines bestimmten Sektors des Rades, ein Radius und/oder dergleichen.

Periodische Merkmale sind Charakteristika in einem Vibrationsprofil, die sich wiederholen, wobei Eigenschaften des Merkmals veränderlich sein können.

Ortungssysteme dienen der Positionsschätzung, also der Schätzung eines Ortes in Bezug zu einem definierten Fixpunkt. Ein Beispiel für ein Ortungssystem ist GPS (global positioning system).

Schienenfahrzeuge sind Fahrzeuge von Bahnen, die auf einer oder mehreren Schienen fahren oder geführt werden. Fahrzeug und Schiene sind dabei ein aufeinander abgestimmtes System, üblicherweise als Rad-Schiene-System bezeichnet. Beispielsweise sind Züge Schienenfahrzeuge.

Räder sind die Räder von Schienenfahrzeugen und Teil eines Radsatzes. Sie können von verschiedener Bauform sein. Es wird auch zwischen angetriebenen Treibrädern und nur tragenden Laufrädern unterschieden. In der Regel sitzen die Radscheiben eines Radsatzes verdrehfest auf der Achswelle, es gibt jedoch auch Losradsätze mit unabhängig auf der feststehenden Achse gelagerten Rädern und einzeln gelagerte Halb- oder Stummelachsen. Bei einem Spurwechselradsatz für Regelfahrzeuge sind die Radscheiben auf der Achswelle verdrehfest seitlich verschieb- und verriegelbar.

Vibrationen sind Schwingungen von Stoffen und Körpern, die selbst elastisch sind oder aus elastisch verbundenen Einzelteilen bzw. Bausteinen bestehen. Vibrationen können hörbar oder nicht hörbar sein.

Ein Vibrationssensor kann als ein ein- oder mehrdimensionaler Beschleunigungssensor ausgeführt sein.

Als Vibrationsprofil kann die Erfassung von Zeitrohdaten mit einer bestimmten Abtastrate verstanden werden.

Unter einer Fouriertransformation kann dabei die Überführung von einer Zeitskala in eine Frequenzskala bzw. eine spektrale Skala verstanden werden.

Die grundlegende Idee der Erfindung ist es, Vibrationen, die von einem Rad eines Schienenfahrzeugs emittiert werden, zu erfassen und die Vibrationen hinsichtlich eines Wiederholungsmusters zu analysieren.

Dieser Vorgehensweise liegt die Annahme zugrunde, dass Räder von Schienenfahrzeugen Unregelmäßigkeiten aufweisen, die bestimmte erkennbare Vibrationen hervorrufen und die sich mit jeder Radumdrehung wiederholen, wobei Charakteristika der Vibrationen, wie Intensität, Frequenz und/oder dergleichen geschwindigkeitsabhängig veränderbar sein können, d.h. dass sich die periodischen Merkmale verändern können, wenn sich Bewegungsgrößen, etwa die Geschwindigkeit gegenüber der Schiene verändert.

Anhand des Wiederholungsmusters in einem Vibrationsprofil lässt sich eine Anzahl von Radumdrehungen, die das Wiederholungsmuster in dem Vibrationsprofil erzeugt haben, ermitteln.

Im Folgenden wird die Strecke, die von dem Schienenfahrzeug zurückgelegt wurde, während das Vibrationsprofil erfasst wurde, ermittelt oder vorgegeben, um aus den Größen "Strecke" sowie "Anzahl der Radumdrehungen" den Raddurchmesser oder die hieraus ableitbare Größe zu ermitteln.

Somit lässt sich der Raddurchmesser eines Rades eines Schienenfahrzeugs ermitteln, ohne dass hierfür in ein drahtgebundenes System des Schienenfahrzeugs eingegriffen werden muss. Stattdessen genügt es, einen Sensor an einer geeigneten Stelle anzubringen und eine geeignete Verbindung zu einer Auswerteeinheit vorzusehen. Handelt es sich bei dem Sensor um einen drahtlosen Sensor, ist die Funktionalität besonders einfach nachrüstbar.

Der Vibrationssensor kann beispielsweise in der Nähe des Rades, an einem Fahrwerk, Getriebe und/oder dergleichen angebracht sein. Bevorzugt kann an jedem Rad des Schienenfahrzeugs ein Vibrationssensor angebracht sein.

Bevorzugt ist die Strecke bzw. ein Start- und Endzeitpunkt der Erfassung der akustischen Emissionen derart dimensioniert, dass es während der Erfassung des akustischen Vibrationsprofils zu einer Vielzahl von Radumdrehungen kommt.

Somit lassen sich Messfehler oder Ungenauigkeiten bezüglich des Start- und Endzeitpunkts der Erfassung bzw. Messfehler der Strecke in Relation zur zurückgelegten Strecke klein halten. Somit lässt sich der Einfluss derartiger Ungenauigkeiten oder Messfehler auf das Rechenergebnis des Raddurchmessers verringern.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Weiterbildung der Erfindung ist die Strecke anhand von Wegpunkten vorgegeben. Die Wegpunkte können beispielsweise an gewissen Stellen in einem Schienennetz ausgebildet sein, beispielsweise indem die Strecke, die von dem Zug während der Erfassung zurückgelegt wird, durch Sender vorgegeben ist.

Gemäß einer bevorzugten Weiterbildung der Erfindung wird die zurückgelegte Wegstrecke und/oder Fahrgeschwindigkeit mittels eines Ortungssystems, insbesondere mittels GPS, gemessen. Die Erfassung von GPS-Daten ist besonders einfach und kostengünstig zu realisieren. Sofern die Strecke, die das Schienenfahrzeug während der Erfassung zurücklegt, an typische Messfehler des Ortungssystems angepasst ist, kann die Strecke auch mit ausreichender Genauigkeit vorgegeben werden. Beispielsweise wirkt sich eine Ungenauigkeit bezüglich der Strecke von drei Metern bei einer Gesamtlänge der Strecke von mehreren hundert Kilometern nicht im wesentlichen Maße aus.

Gemäß einer bevorzugten Weiterbildung der Erfindung kann das akustische Vibrationsprofil mittels einer Fouriertransformation, insbesondere einer Fast-Fourier Analyse, eines Cepstrums und/oder eines weiteren Analyse- oder Transformationsverfahrens weiter prozessiert werden. Diese Weiterverarbeitung kann entweder direkt auf dem Sensor und/oder in einer Cloudanbindung erfolgen. Somit lässt sich die rechnerische Ermittlung effizient umsetzen bzw. Rechenaufwand verringern.

Gemäß einer bevorzugten Weiterbildung der Erfindung kann anstatt eines Vibrationssensors auch ein anderer akustischer Sensor, beispielsweise ein Mikrofon zum Einsatz kommen.

Gemäß einer bevorzugten Weiterbildung der Erfindung wird der Raddurchmesser oder die hieraus ableitbare Größe gespeichert und überwacht, um eine Wartung und/oder Reparatur des Schienenfahrzeugs zu planen.

Gemäß einer bevorzugten Weiterbildung werden die periodischen Merkmale des Vibrationsprofils in Abhängigkeit der Fahrgeschwindigkeit mittels eines neuronalen Netzes ermittelt.

Es versteht sich, dass ein Steuergerät für ein Schienenfahrzeug mit einer Schnittstelle zu einem Vibrationssensor, der eingerichtet ist, Vibrationen eines Rades zu erfassen, einer Auslöseeinheit, die eingerichtet ist, eine Erfassung von Vibrationen derart zu steuern, dass die Länge der Strecke, die während der Erfassung der Vibrationen zurückgelegt wurde, ermittelbar oder bekannt ist, sowie mit einer Recheneinheit, die eingerichtet ist, eine Anzahl an Radumdrehungen anhand der erfassten Vibrationen zu ermitteln sowie einen Raddurchmesser eines Rades des Schienenfahrzeugs anhand der Länge der Strecke sowie der Anzahl der Radumdrehungen zu berechnen, vorteilhaft ist.

Der Vibrationssensor kann zum Beispiel in der Nähe des Rades beispielsweise auf einem Drehgestell des Schienenfahrzeugs oder beispielsweise auf dem Getriebe des Schienenfahrzeugs angebracht werden. Die erfassten Daten lassen sich via Bluetooth oder einer anderen Verbindungstechnologie an ein Steuergerät übermitteln. Dort lassen sich die gewonnenen Mess- und Streckendaten verarbeiten und an eine IoT-Plattform, einen netzgebundenen Speicher und/oder eine Cloudanbindung übermitteln. Bahnbetreiber erhalten stets aktuelle Analyseergebnisse, die dabei helfen, Wartungszyklen zustandsbezogen zu planen, die Effizienz zu erhöhen und ungeplante Stillstände zu vermeiden. Verschleiß, Beschädigungen und mögliche Gefahrenstellen eines Rades werden so frühzeitig erkannt.

Ein Computerprogrammprodukt gemäß einer Ausführungsform der Erfindung führt die Schritte eines Verfahrens gemäß der vorangehenden Beschreibung aus, wenn das Computerprogrammprodukt auf einem fahrzeuginternen Computer, läuft. Wenn das betreffende Programm auf einem Computer zum Einsatz kommt, ruft das Computerprogrammprodukt einen Effekt hervor, nämlich die Detektion einer Verringerung des Raddurchmessers, insbesondere die Feststellung, dass ein Schienenfahrzeug gewartet werden sollte.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:

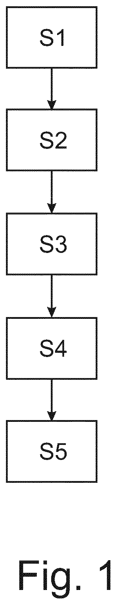

- Figur 1: ein schematisches Blockdiagramm einer Ausführungsform der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleichwirkende Elemente, Merkmale und Komponenten - sofern nicht anders ausgeführt ist - jeweils mit denselben Bezugszeichen versehen.

### BESCHREIBUNG VON AUSFÜHRUNGSBEISPIELEN

Figur 1 zeigt ein schematisches Blockdiagramm eines Verfahrens zum Ermitteln eines Raddurchmessers oder einer hieraus ableitbaren Größe eines Schienenfahrzeugs mit den Schritten S1 bis S5.

In dem Schritt S1 werden Vibrationen eines Rades mittels eines Vibrationssensors als Vibrationsprofil erfasst.

In dem Schritt S2 werden periodische Merkmale in dem Vibrationsprofil ermittelt.

In dem Schritt S3 wird eine Anzahl an Radumdrehungen in dem akustischen Vibrationsprofil anhand der periodischen Merkmale des Vibrationsprofils abgeleitet.

In dem Schritt S4 wird eine Strecke, die von dem Schienenfahrzeug zurückgelegt wurde, während das Vibrationsprofil erfasst wurde, ermittelt oder vorgegeben.

In dem Schritt S5 wird der Raddurchmesser oder die hieraus ableitbare Größe anhand der Strecke und der Anzahl der Radumdrehungen rechnerisch ermittelt.

### Bezugszeichen

S1-S5 Verfahrensschritte

## Patentansprüche

1. Verfahren zum Ermitteln eines Raddurchmessers oder einer hieraus ableitbaren Größe eines Schienenfahrzeugs mit den folgenden Schritten:
- Erfassen (S1) von Vibrationen, die von einem Rad des Schienenfahrzeugs emittiert werden, mittels eines Vibrationssensors als Vibrationsprofil;
- Ermitteln (S2) von periodischen Merkmalen in dem Vibrationsprofil;
- Ableiten (S3) einer Anzahl an Radumdrehungen in dem Vibrationsprofil anhand der periodischen Merkmale des Vibrationsprofils;
- Ermitteln (S4) oder Vorgeben einer Strecke, die von dem Schienenfahrzeug zurückgelegt wurde, während das akustische Vibrationsprofil erfasst wurde;
- Ermitteln (S5) des Raddurchmessers oder der hieraus ableitbaren Größe anhand der Strecke und der Anzahl der Radumdrehungen.

2. Verfahren nach Anspruch 1,
wobei die Strecke anhand von Wegpunkten in einem Schienennetz, die insbesondere als Sender ausgebildet sind, vorgegeben ist.

3. Verfahren nach einem der vorstehenden Ansprüche,
wobei die Strecke und/oder Fahrgeschwindigkeit mittels eines Ortungssystems, insbesondere mittels GPS, gemessen wird.

4. Verfahren nach einem der vorstehenden Ansprüche,
wobei das Vibrationsprofil mittels einer Fouriertransformation, insbesondere einer Fast-Fourier Analyse, eines Cepstrums und/oder eines weiteren Analyse- oder Transformationsverfahrens weiter prozessiert wird.

5. Verfahren nach einem der vorstehenden Ansprüche,
wobei der Vibrationssensor als akustischer Sensor ausgebildet ist.

6. Verfahren nach einem der vorstehenden Ansprüche,
wobei der Raddurchmesser oder die hieraus ableitbare Größe gespeichert und überwacht wird, um eine Wartung und/oder Reparatur des Schienenfahrzeugs zu planen.

7. Verfahren nach einem der vorstehenden Ansprüche,
wobei die periodischen Merkmale des Vibrationsprofils in Abhängigkeit der Fahrgeschwindigkeit mittels eines neuronalen Netzes ermittelt werden.

8. Steuergerät für ein Schienenfahrzeug zur Durchführung des Verfahrens einem der vorstehenden Ansprüche mit
- einer Schnittstelle zu einem Vibrationssensor, der eingerichtet ist, Vibrationen eines Rades zu erfassen;
- einer Auslöseeinheit, die eingerichtet ist, eine Vibrationserfassung derart zu starten und zu beenden, dass die Länge der Strecke, die während der Vibrationserfassung zurückgelegt wurde, ermittelbar oder bekannt ist; sowie mit
- einer Recheneinheit, die eingerichtet ist, eine Anzahl an Radumdrehungen anhand der erfassten Vibrationen zu ermitteln sowie einen Raddurchmesser eines Rades des Schienenfahrzeugs anhand der Länge der Strecke sowie der Anzahl der Radumdrehungen zu berechnen.

9. Computerprogrammprodukt mit Programmcode-Mitteln, um das Verfahren nach einem der vorstehenden Ansprüche 1-7 mittels eines Steuergeräts nach Anspruch 8 durchzuführen.

## Claims

1. Method for determining a wheel diameter, or a variable derivable from it, of a rail vehicle, having the following steps:
- recording (S1) vibrations emitted by a wheel of the rail vehicle by means of a vibration sensor as a vibration profile;
- determining (S2) periodic features in the vibration profile;
- deriving (S3) a number of wheel revolutions in the vibration profile on the basis of the periodic features of the vibration profile;
- determining (S4) or specifying a distance travelled by the rail vehicle while the acoustic vibration profile was being recorded;
- determining (S5) the wheel diameter or the variable derivable from it on the basis of the distance and the number of wheel revolutions.

2. Method according to Claim 1,
wherein the distance is specified on the basis of waypoints in a rail network which are in the form of transmitters, in particular.

3. Method according to one of the preceding claims, wherein the distance and/or driving speed is/are measured by means of a positioning system, in particular by means of GPS.

4. Method according to one of the preceding claims, wherein the vibration profile is processed further by means of a Fourier transform, in particular a fast Fourier analysis, a cepstrum and/or a further analysis or transformation method.

5. Method according to one of the preceding claims, wherein the vibration sensor is in the form of an acoustic sensor.

6. Method according to one of the preceding claims, wherein the wheel diameter or the variable derivable from it is stored and monitored in order to plan maintenance and/or repair of the rail vehicle.

7. Method according to one of the preceding claims, wherein the periodic features of the vibration profile are determined on the basis of the driving speed by means of a neural network.

8. Control unit for a rail vehicle for carrying out the method according to one of the preceding claims, having
- an interface to a vibration sensor which is configured to record vibrations of a wheel;
- a triggering unit which is configured to start and stop vibration recording in such a way that the length of the distance travelled during the vibration recording can be determined or is known; and having
- a computing unit which is configured to determine a number of wheel revolutions based on the vibrations recorded and to calculate a wheel diameter of a wheel of the rail vehicle based on the length of the distance and the number of wheel revolutions.

9. Computer program product having program code means for carrying out the method according to one of the preceding Claims 1-7 by means of a control unit according to Claim 8.

## Revendications

1. Procédé de détermination d'un diamètre de roue ou d'une grandeur d'un véhicule ferroviaire pouvant être déduite de celui-ci, avec les étapes suivantes :
- de détection (E1) de vibrations, qui sont émises par une roue du véhicule ferroviaire, au moyen d'un capteur de vibrations en tant que profil de vibration ;
- de détermination (E2) de caractéristiques périodiques dans le profil de vibration ;
- de déduction (E3) d'un nombre de tours de roue dans le profil de vibration à l'aide des caractéristiques périodiques du profil de vibration ;
- de détermination (E4) ou de spécification d'un trajet que le véhicule ferroviaire a parcouru pendant que le profil de vibration acoustique a été détecté ;
- de détermination (E5) du diamètre de roue ou de la grandeur pouvant être déduite de celui-ci à l'aide du trajet et du nombre de tours de roue.

2. Procédé selon la revendication 1,
le trajet étant spécifié à l'aide de points de cheminement dans un réseau ferroviaire, qui sont réalisés en particulier en tant qu'émetteurs.

3. Procédé selon l'une des revendications précédentes, le trajet et/ou la vitesse de déplacement étant mesurés au moyen d'un système de localisation, en particulier au moyen d'un GPS.

4. Procédé selon l'une des revendications précédentes, le profil de vibration étant traité par ailleurs au moyen d'une transformation de Fourier, en particulier d'une analyse de Fourier rapide, d'un cepstre et/ou d'un autre procédé d'analyse ou de transformation.

5. Procédé selon l'une des revendications précédentes, le capteur de vibrations étant réalisé en tant qu'un capteur acoustique.

6. Procédé selon l'une des revendications précédentes, le diamètre de roue ou la grandeur pouvant être déduite de celui-ci étant mémorisé(e) et surveillé(e) pour planifier une maintenance et/ou une réparation du véhicule ferroviaire.

7. Procédé selon l'une des revendications précédentes, les caractéristiques périodiques du profil de vibration étant déterminées au moyen d'un réseau neuronal en fonction de la vitesse de déplacement.

8. Appareil de commande pour un véhicule ferroviaire destiné à mettre en œuvre le procédé selon l'une des revendications précédentes, avec
- une interface avec un capteur de vibrations qui est mis au point pour détecter des vibrations d'une roue ;
- une unité de déclenchement, qui est mise au point pour démarrer et arrêter une détection de vibrations de telle manière que la longueur du trajet, qui a été parcourue pendant la détection de vibrations, peut être déterminée ou est connue ; ainsi qu'avec
- une unité de calcul, qui est mise au point pour déterminer un nombre de tours de roue à l'aide des vibrations détectées ainsi pour calculer un diamètre de roue d'une roue du véhicule ferroviaire à l'aide de la longueur du trajet et du nombre de tours de roue.

9. Produit-programme d'ordinateur avec des moyens de code de programme pour mettre en œuvre le procédé selon l'une des revendications 1 - 7 au moyen d'un appareil de commande selon la revendication 8.
